# EUROPÄISCHE PATENTSCHRIFT

(11) **EP 1 494 975 B1**
(45) Veröffentlichungstag und Bekanntmachung des Hinweises auf die Patenterteilung: **14.06.2006**
(21) Anmeldenummer: 03746151.4
(22) Anmeldetag: 04.04.2003
(51) Int. Cl.: C02F 11/00, C02F 1/36

(54) **VORRICHTUNG ZUR DESINTEGRATION VON KLÄRSCHLAMM**
DEVICE FOR THE DISINTEGRATION OF SLUDGE
DISPOSITIF DE DESINTEGRATION DE BOUES RESIDUAIRES

(30) Priorität: 16.04.2002 AT 5802002
(43) Veröffentlichungstag der Anmeldung: 12.01.2005
(73) Patentinhaber: Kubinger, Ulrich, 4675 Weibern (AT)
(72) Erfinder: Kubinger, Ulrich, 4675 Weibern (AT)
(74) Vertreter: Hübscher, Helmut
(86) Internationale Anmeldenummer: PCT/AT2003/000098
(87) Internationale Veröffentlichungsnummer: WO 2003/086989

(56) Entgegenhaltungen:
- DE-C- 19 517 381
- PATENT ABSTRACTS OF JAPAN vol. 2002, no. 02, 2. April 2002 (2002-04-02) & JP 2001 300527 A (KUBOTA CORP), 30. Oktober 2001 (2001-10-30)
- PATENT ABSTRACTS OF JAPAN vol. 2002, no. 04, 4. August 2002 (2002-08-04) & JP 2001 334292 A (KUBOTA CORP), 4. Dezember 2001 (2001-12-04)
- TIEHM^1 A ET AL: "Ultrasonic waste activated sludge disintegration for improving anaerobic stabilization" WATER RESEARCH, ELSEVIER SCIENCE PUBLISHERS, AMSTERDAM, NL, Bd. 35, Nr. 8, Juni 2001 (2001-06), Seiten 2003-2009, XP004233405 ISSN: 0043-1354

## Beschreibung

Die Erfindung bezieht sich auf eine Vorrichtung zur Desintegration von Klärschlamm mit einem eine vertikale Achse aufweisenden Behälter, der einen unteren Schlammzulauf und einen oberen Schlammablauf aufweist, und mit in den Behälter eingesetzten, zur Behälterachse parallelen, stabförmigen Ultraschallschwingern, die mit gegenseitigem Abstand und mit Abstand vom Behältermantel angeordnet sind.

Durch eine Desintegration von Klärschlamm können die Schlammeigenschaften hinsichtlich der Faulung, der Sedimentation und der Entwässerung erheblich verbessert werden, so daß einfachen und betriebssicheren Verfahren für einen solchen Zellaufschluß steigende Bedeutung zukommt. Eine vielversprechende Möglichkeit zur Desintegration zellulärer Strukturen besteht darin, den Belebtschlamm mit Ultraschall zu behandeln. Durch die periodische Verdichtung und Entspannung des Belebtschlammes treten Kavitationsblasen auf, die unter Einwirkung des äußeren Druckes implodieren, was zu örtlich begrenzten, schnellen Flüssigkeitsströmungen und damit verbunden zu hohen Temperaturen und Scherkräften mit der Folge führt, daß die Zellmembranen der Mikroorganismen im Bereich dieser Wirkungen aufgebrochen und die Zellinhaltsstoffe freigegeben werden. Zu diesem Zweck ist es bekannt (DE 195 17 381 C1), einen rohrförmigen Behälter mit vertikaler Achse vorzusehen, in den ein stabförmiger Ultraschallschwinger koaxial eingesetzt wird, so daß der zu behandelnde Klärschlamm von unten nach oben durch den Ringspalt zwischen dem stabförmigen Ultraschallschwinger und dem rohrförmigen Behälter gefördert werden kann. Zur Erhöhung des Schlammdurchsatzes können in einer abgewandelten Ausführung mehrere parallele, in gleichem Abstand voneinander angeordnete, stabförmige Ultraschallschwinger von einem gemeinsamen Mantelrohr umschlossen werden, durch das eine entsprechend größere Schlammenge gefördert werden kann. Unabhängig davon, ob in einem Mantelrohr ein oder mehrere stabförmige Ultraschallschwinger vorgesehen werden, muß der Strömungsquerschnitt für die Schlammströmung begrenzt bleiben, um eine befriedigende Aufschlußrate zu erreichen. Diese begrenzten Strömungsquerschnitte bringen jedoch die Gefahr von Betriebsstörungen durch ein teilweises Verlegen der Strömungskanäle mit sich. In diesem Zusammenhang ist zu bedenken, daß die Schlammströmung für eine wirkungsvolle Desintegration vorzugsweise entgegen der Sedimentationsneigung des Schlammes entlang der Ultraschallschwinger aufwärts strömen soll.

Zur Verbesserung des Zellaufschlusses wurde schließlich vorgeschlagen (EP 983 968 A2), die Amplitude der eingetragenen Schallschwingungen zu regeln und konstant zu halten. Da die Behandlung des Klärschlammes in herkömmlicher Weise in einem Ringspalt zwischen einem Ultraschallschwinger und einem den Ultraschallschwinger aufnehmenden Führungsrohr für den zu behandelnden Schlamm besteht, treten alle mit einem begrenzten Strömungsquerschnitt verbundenen Nachteile auf. Dem Verfahren fehlt folglich die erforderliche Anpassungsfähigkeit an sich ändernde Betriebsparameter, so daß keine hohe Betriebssicherheit gewährleistet werden kann.

Der Erfindung liegt somit die Aufgabe zugrunde, eine Vorrichtung zur Desintegration von Klärschlamm so auszugestalten, daß trotz einer Vermeidung der durch einen begrenzten Strömungsquerschnitt bedingten Nachteile eine wirksame Beschallung für den Zellaufschluß sichergestellt werden kann, und zwar auch für in unterschiedlichen Mengen oder Zusammensetzungen anfallenden Klärschlamm.

Die Erfindung löst die gestellte Aufgabe dadurch, daß der Behälter ein zur Behälterachse koaxiales Rührwerk aufnimmt und daß die Ultraschallschwinger das Rührwerk in einem konzentrischen Kreis umgeben.

Durch das Zusammenwirken eines zum Behälter koaxial angeordneten Rührwerkes mit den das Rührwerk im Bereich des Behältermantels entlang eines konzentrischen Kreises umgebenden, stabförmigen Ultraschallschwingern wird eine turbulente Schlammströmung um die Ultraschallschwinger erzwungen, so daß stets neue Anteile der Schlammströmung in den intensiven Beschallungsbereich der Ultraschallschwinger gelangen, was zu einer wirtschaftlichen Ausnützung der Schallenergie führt. Da wegen des Rührwerkes keine Beschränkung des Strömungsquerschnittes auf einen die Ultraschallschwinger unmittelbar umschließenden Bereich erforderlich wird, werden alle mit solchen beschränkten Strömungsquerschnitten verbundenen Nachteile von vornherein ausgeschlossen. Dazu kommt, daß durch das Rührwerk der zu behandelnde Schlamm im Behälter einer sanften Umwälzbewegung unterworfen wird, die für die sedimentierenden Feststoffe eine vorteilhafte Sichtung mit sich bringt, so daß sich solche Stoffe am Behälterboden ablagern und keinen Beitrag zum Verschleiß der Ultraschallschwinger leisten können.

Darüber hinaus wird die Verweilzeit des Klärschlammes im Behälter nicht wie bei Vorrichtungen, die einen Ringspalt zwischen dem stabförmigen Ultraschallschwinger und einem ihn umschließenden Mantelrohr zur Führung des zu behandelnden Schlammes aufweisen, durch die Strömungsgeschwindigkeit bestimmt, so daß über die Verweilzeit des zu behandelnden Schlammes im Behälter der Aufschlußgrad in vorteilhafter Weise beeinflußt werden kann. Außerdem kann die Beschallung auch über ein Zu- und Abschalten einzelner Ultraschallschwinger gesteuert werden. Die Ultraschallschwinger werden vorzugsweise mit konstanter Leistung gespeist. Durch wechselnde Verhältnisse während des Betriebes ändert sich der Arbeitspunkt der Ultraschallschwinger. Zur Konstanthaltung der Leistung werden daher die Amplituden entsprechend nachgeführt. Damit die Ultraschallschwinger nicht gefährdet werden, wenn sie beispielsweise ihre Leistung wegen eines zu geringen Füllstandes nicht mehr auf den zu beschallenden Klärschlamm abgeben können, wird der Strom zur Anspeisung der Ultraschallschwinger nach oben begrenzt.

Um über das Rührwerk der Umlaufströmung des zu behandelnden Schlammes eine axiale Strömungskomponente überlagern zu können, kann das Rührwerk vorteilhaft aus einer Rührschnecke mit einer Förderrichtung von oben nach unten bestehen, so daß die im Bereich des Rührwerkes abwärts gerichtete Schlammströmung eine aufwärts gerichtete Schlammströmung im Bereich des Behältermantels zur Folge hat, was im Hinblick auf das Strömungsverhalten des zu behandelnden Schlammes im Bereich der Ultraschallschwinger den Vorteil ergibt, daß der Austausch von Schlammteilchen im Bereich der Ultraschallschwinger zusätzlich unterstützt wird.

Wie bereits ausgeführt wurde, wird der Betrieb der Vorrichtung durch die Sedimentation von Feststoffen nicht belastet. Damit diese Sedimentation durch den Schlammzulauf nicht gestört wird, kann der Schlammzulauf im unteren Drittel des Behältermantels vorgesehen werden, wodurch die grundsätzliche Aufwärtsströmung vom Schlammzulauf zum Schlammablauf erhalten bleibt, die Sedimentation aber nicht betroffen wird. Die sich ablagernden Sedimente können fallweise über eine verschließbare Austragsöffnung im Behälterboden abgezogen werden. Kann die Drehrichtung des Rührwerkes umgekehrt werden, so kann im Bedarfsfall eine Reinigungswirkung durch eine damit verbundene Umkehr der Strömungsrichtung erzielt werden. Durch diese Maßnahme können insbesondere mit dem zu beschallenden Schlamm mitgeführten, sich an den Ultraschallschwingern anlagernde Faserstoffe wieder von den stabförmigen Ultraschallschwingern abgelöst werden.

Neben dem Zu- und Abschalten einzelner Ultraschallschwinger zur Berücksichtigung des Anfalls unterschiedlicher Mengen an zu beschallendem Klärschlamm oder unterschiedlich zusammengesetzten Schlämmen ist es möglich, die Drehzahl des Rührwerkes entsprechend einzustellen, um über die Umwälzgeschwindigkeit des Klärschlammes im Behälter Einfluß auf die Beschallung des Schlammes zu nehmen. Aufgrund der Möglichkeit, die Schlammströmung mit Hilfe des Rührwerkes wiederholt an die stabförmigen Ultraschallschwinger heranzuführen, ist die sonst zu beachtende Abhängigkeit des Aufschlußgrades von der Strömungsgeschwindigkeit und gegebenenfalls von der Schwingungsamplitude nicht gegeben, was einfache Betriebsbedingungen schafft, die eine vorteilhafte Anpassung an sich ändernde Verhältnisse erlauben.

In der Zeichnung ist der Erfindungsgegenstand beispielsweise dargestellt. Es zeigen
- Fig. 1: eine erfindungsgemäße Vorrichtung zur Desintegration von Klärschlamm in einem schematischen Blockschaltbild,
- Fig. 2: einen erfindungsgemäßen Behälter zum Beschallen von Klärschlamm in einem vereinfachten Axialschnitt und
- Fig. 3: den Behälter nach der Fig. 2 in einem Schnitt nach der Linie III-III der Fig. 2.

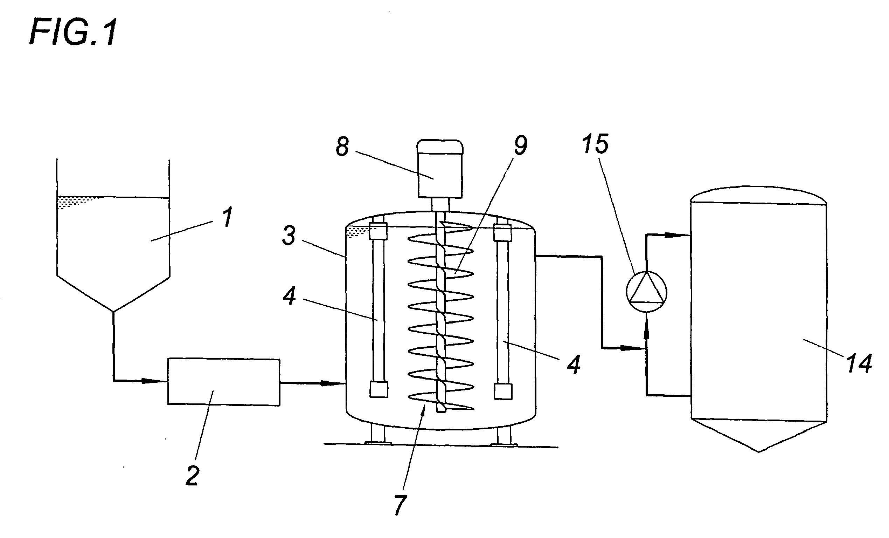

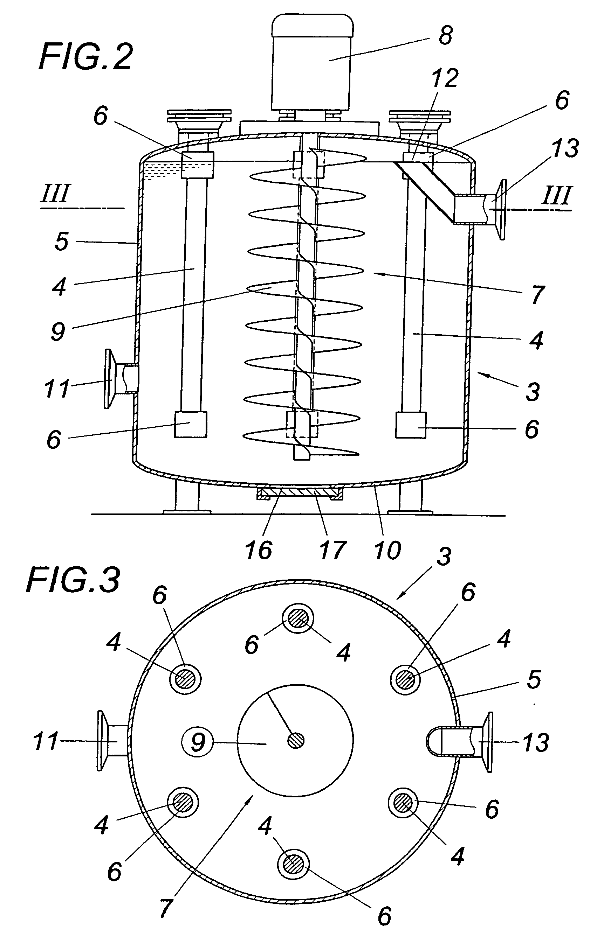

Gemäß der Fig. 1 wird Schlamm aus dem Vorklärbecken, dem Nachklärbecken oder dem Faulturm einer Kläranlage nach einer entsprechenden Entwässerung in einem Vorlagebehälter 1 zwischengespeichert, bevor der Klärschlamm aus dem Vorlagebehälter 1 mit Hilfe einer Exzenterschneckenpumpe 2, die vorzugsweise hinsichtlich der Fördermenge gesteuert werden kann, einem Behälter 3 zur Beschallung zugefördert wird. Die Beschallung erfolgt über stabförmige Ultraschallschwinger 4, die gemäß den Fig. 2 und 3 entlang eines zur vertikalen Achse des Behälters 3 konzentrischen Kreises im Bereich des Behältermantels 5 mit radialem Abstand von diesem angeordnet sind. An den Stirnseiten der Ultraschallschwinger 4 ist jeweils ein Schallwandler 6 angekoppelt. Konzentrisch zu den entlang eines Kreises angeordneten Ultraschallschwingern 4 ist im Behälter 3 ein Rührwerk 7 gelagert, das durch einen Motor 8 angetrieben wird und hinsichtlich der Drehzahl gesteuert werden kann. Das Rührwerk 7 wird gemäß dem Ausführungsbeispiel durch eine Rührschnecke 9 gebildet, die auf den Klärschlamm in ihrem Bereich eine zusätzliche, abwärts gegen den Behälterboden 10 gerichtete Förderwirkung ausübt. Durch diese Rührschnecke 9 wird somit innerhalb des Behälters 3 eine die Ultraschallschwinger 4 in vorteilhafter Weise turbulent umspülende Schlammströmung erreicht, mit deren Hilfe der Klärschlamm wiederholt an die Ultraschallschwinger 4 herangeführt wird, wobei beschallte Schlammanteile aus dem unmittelbaren Beschallungsbereich der Ultraschallschwinger 4 durch noch nicht beschallte Schlammanteile in einem steten Wechsel verdrängt werden, was eine sehr wirtschaftliche Beschallung des Klärschlammes bei einem guten Zellaufschluß sicherstellt. Der über einen im unteren Drittel des Behältermantels 5 angeordneten Schlammzulauf 11 in den Behälter 3 geförderte Klärschlamm wird demnach je nach der Verweilzeit im Behälter 3, der Umwälzbewegung durch die Rührschnecke 9 und der Anzahl der zu bzw. abgeschalteten Ultraschallschwingern 4 den jeweiligen Anforderungen entsprechend desintegriert, bevor er über einen Überlauf 12 zu einem Schlammablauf 13 gelangt, über den der Behälter 3 gemäß der Fig. 1 beispielsweise an einen Faulbehälter 14 angeschlossen ist, um den aufgeschlossenen Klärschlamm aus dem Behälter 3 dem Faulbehälter 14 über eine Umwälzpumpe 15 zuzuführen.

Aufgrund der durch das Rührwerk 7 bedingten Umwälzbewegung des zu beschallenden Klärschlammes tritt eine vorteilhafte Sichtung im Bereich der sedimentierenden Feststoffe auf, die sich im Bereich des Behälterbodens 10 ablagern, und zwar unbeeinträchtigt durch den über den Schlammzulauf 11 zugeförderten Klärschlamm. Die sich im Bodenbereich ablagernden Sedimente können in entsprechenden zeitlichen Abständen über eine im Behälterboden 10 vorgesehene Austragsöffnung 16 aus dem Behälter 3 ausgeschieden werden. Wird die Austragsöffnung 16 durch einen Schieber 17 verschlossen, so ergeben sich für den Austrag der Sedimente vorteilhafte Bedingungen.

## Patentansprüche

1. Vorrichtung zur Desintegration von Klärschlamm mit einem eine vertikale Achse aufweisenden Behälter (3), der einen unteren Schlammzulauf (11) und einen oberen Schlammablauf (13) aufweist, und mit in den Behälter (3) eingesetzten, zur Behälterachse parallelen, stabförmigen Ultraschallschwingern (4), die mit gegenseitigem Abstand und mit Abstand vom Behältermantel (5) angeordnet sind, **dadurch gekennzeichnet, daß** der Behälter (3) ein zur Behälterachse koaxiales Rührwerk (7) aufnimmt und daß die Ultraschallschwinger (4) das Rührwerk (7) in einem konzentrischen Kreis umgeben.

2. Vorrichtung nach Anspruch 1, **dadurch gekennzeichnet, daß** die stabförmigen Ultraschallschwinger (4) je für sich einschaltbar sind.

3. Vorrichtung nach Anspruch 1 oder 2, **dadurch gekennzeichnet, daß** das Rührwerk (7) aus einer Rührschnecke (9) mit einer Förderrichtung von oben nach unten besteht.

4. Vorrichtung nach einem der Ansprüche 1 bis 3, **dadurch gekennzeichnet, daß** der Schlammzulauf (11) im unteren Drittel des Behältermantels (5) vorgesehen ist.

5. Vorrichtung nach einem der Ansprüche 1 bis 4, **dadurch gekennzeichnet, daß** der Behälterboden (10) eine verschließbare Austragsöffnung (16) für Sedimente aufweist.

6. Vorrichtung nach einem der Ansprüche 1 bis 5, **dadurch gekennzeichnet, daß** die Drehrichtung des Rührwerkes (7) umkehrbar ist.

7. Vorrichtung nach einem der Ansprüche 1 bis 6, **dadurch gekennzeichnet, daß** die Drehzahl des Rührwerkes (7) steuerbar ist.

## Claims

1. Device for the disintegration of sludge with a receptacle (3) having a vertical axis which comprises a lower sludge inlet (11) and an upper sludge outlet (13) and with rod-like ultrasound oscillators (4) parallel to the receptacle axis inserted in the receptacle (3), wherein the ultrasound oscillators (4) are arranged spaced apart from each other and at a distance from the receptacle shell (5), **characterised in that** the receptacle (3) receives an agitator (7) coaxial with the receptacle axis and **in that** the ultrasound oscillators (4) surround the agitator (7) in a concentric circle.

2. Device according to claim 1, **characterised in that** the rod-like ultrasound oscillators (4) can each be switched on independently.

3. Device according to claim 1 or 2, **characterised in that** the agitator (7) consists of an agitator worm (9) with a downward direction of conveyance from above.

4. Device according to one of the claims 1 to 3, **characterised in that** the sludge inlet (11) is provided in the lower third of the receptacle shell (5).

5. Device according to one of the claims 1 to 4, **characterised in that** the container bottom (10) has a closable discharge opening (16) for sediments.

6. Device according to one of the claims 1 to 5, **characterised in that** the rotation direction of the agitator (7) can be reversed.

7. Device according to one of the claims 1 to 6, **characterised in that** the speed of the agitator (7) can be controlled.

## Revendications

1. Dispositif de désintégration de boues résiduaires de curage avec un récipient (3) présentant un axe vertical, ayant une amenée en boues inférieure (11) et une évacuation de boues supérieure (13), et avec des vibreurs à ultrasons (4) en forme de barres, parallèles à l'axe de récipient, insérés dans le récipient (3), les vibreurs étant disposés suivant un espacement mutuel et à distance de l'enveloppe de récipient (5), **caractérisé en ce que** le récipient (3) reçoit un dispositif agitateur (7) coaxial à l'axe de récipient, et **en ce que** les vibreurs à ultrasons (4) entourent, en un cercle concentrique, le dispositif agitateur (7).

2. Dispositif selon la revendication 1, **caractérisé en ce que** les vibreurs à ultrasons (4) en forme de barres peuvent être mis en service chacun pour soi.

3. Dispositif selon la revendication 1 ou 2, **caractérisé en ce que** le dispositif agitateur (7) est formé d'une vis agitatrice (9), ayant un sens de transport allant du haut vers le bas.

4. Dispositif selon l'une des revendications 1 à 3, **caractérisé en ce que** l'amenée de boues (11) est prévue dans le tiers inférieur de l'enveloppe de récipient (5).

5. Dispositif selon l'une des revendications 1 à 4, **caractérisé en ce que** le fond de récipient (10) présente une ouverture d'évacuation (16) obturable, pour les sédiments.

6. Dispositif selon l'une des revendications 1 à 5, **caractérisé en ce que** le sens de rotation du dispositif agitateur (7) est inversible.

7. Dispositif selon l'une des revendications 1 à 6, **caractérisé en ce que** la vitesse de rotation du dispositif agitateur (7) est susceptible d'être commandée.
